(19) **Europäisches Patentamt**
**European Patent Office**
**Office européen des brevets**

(11) **EP 4 468 785 A1**

(12) **EUROPEAN PATENT APPLICATION**
published in accordance with Art. 153(4) EPC

(43) Date of publication:
**27.11.2024  Bulletin 2024/48**

(21) Application number: **23762748.4**

(22) Date of filing: **17.02.2023**

(51) International Patent Classification (IPC):
**H04W 36/00** (2009.01)

(52) Cooperative Patent Classification (CPC):
**H04W 36/00; H04W 36/30; H04W 76/14**

(86) International application number:
**PCT/CN2023/076818**

(87) International publication number:
**WO 2023/165347 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **01.03.2022  CN 202210199863**

(71) Applicant: **Huawei Technologies Co., Ltd.**
**Shenzhen, Guangdong 518129 (CN)**

(72) Inventor: **CHEN, Honghuan**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR CHANNEL SWITCHING**

(57)  Embodiments of this application disclose a channel switching method and an apparatus, to implement dynamic adjustment of a service channel. This helps reduce interference from another electronic device and improve stability and reliability of data transmission over a P2P connection. The channel switching method includes: measuring at least one first channel parameter of a primary channel, and determining current channel quality information of the primary channel based on the at least one first channel parameter, where a service channel is located on the primary channel, and the current channel quality information indicates current communication quality; obtaining trend information of the primary channel based on the current channel quality information and at least one piece of historical channel quality information, where the trend information indicates a channel quality change trend, and the at least one piece of historical channel quality information is determined based on a channel parameter measured before the at least one first channel parameter; and selectively switching the service channel based on the current channel quality information and the trend information.

Measure at least one first channel parameter of a primary channel, and determine current channel quality information of the primary channel based on the at least one first channel parameter, where a service channel is located on the primary channel — S301

Obtain trend information of the primary channel based on the current channel quality information and at least one piece of historical channel quality information — S302

Selectively switch the service channel based on the current channel quality information and the trend information — S303

FIG. 3

EP 4 468 785 A1

## Description

This application claims priority to Chinese Patent Application No. 202210199863.0, filed with the China National Intellectual Property Administration on March 1, 2022 and entitled "CHANNEL SWITCHING METHOD AND APPARATUS", which is incorporated herein by reference in its entirety.

## TECHNICAL FIELD

This application relates to wireless communication technologies, and in particular, to a channel switching method and an apparatus.

## BACKGROUND

With development of science and technology, more electronic devices such as a smartphone, a tablet computer, and various smart home devices are widely used. When these electronic devices are used in some application scenarios such as an application scenario of wireless projection and an application scenario of file transfer, connections need to be established between these electronic devices to perform information transmission. Different electronic devices may establish a point-to-point (point-to-point, P2P) connection via wireless fidelity (wireless fidelity, Wi-Fi), and further perform information transmission over the established P2P connection.

However, there is usually another electronic device around two electronic devices that establish a P2P connection. The another electronic device causes interference to the two electronic devices that establish the P2P connection, and the interference usually changes dynamically. Therefore, how to dynamically adjust a service channel during service running to reduce interference from another electronic device, especially for a performance-sensitive application scenario, becomes an urgent technical problem to be resolved.

## SUMMARY

This application provides a channel switching method and an apparatus, to implement dynamic adjustment of a service channel. This helps reduce interference from another electronic device, and improve stability and reliability of data transmission over a P2P connection.

According to a first aspect, this application provides a channel switching method. The method includes: measuring at least one first channel parameter of a primary channel, and determining current channel quality information of the primary channel based on the at least one first channel parameter, where a service channel is located on the primary channel, and the current channel quality information indicates current communication quality; obtaining trend information of the primary channel based on the current channel quality information and at least one piece of historical channel quality information, where the trend information indicates a channel quality change trend, and the at least one piece of historical channel quality information is determined based on a channel parameter measured before the at least one first channel parameter; and selectively switching the service channel based on the current channel quality information and the trend information.

Therefore, the current channel quality information of the primary channel and the trend information of the primary channel are obtained, where the service channel is located on the primary channel. The service channel is selectively switched based on the current channel quality information of the primary channel and the trend information of the primary channel. A change direction of channel quality of the primary channel may be learned in advance based on the trend information of the primary channel, so that the service channel is selectively switched in advance. This helps avoid a problem of service transmission freezing caused by channel quality deterioration.

In a possible design, the selectively switching the service channel based on the current channel quality information and the trend information includes: if the current channel quality information and the trend information satisfy a first condition, switching the service channel to at least one first candidate channel to obtain a scanning result of the at least one first candidate channel, and switching the service channel back to the primary channel. In this way, scanning of one or more first candidate channels can be completed.

The first condition includes any one of the following: the current channel quality information is greater than a second threshold, and the trend information is first trend information; or the current channel quality information is greater than a first threshold but less than a second threshold, and the trend information is third trend information, where the first trend information indicates that channel quality of the primary channel after a current moment starts to deteriorate, and the third trend information indicates that the channel quality of the primary channel after the current moment remains unchanged.

If the current channel quality information is less than a first threshold and/or the trend information is second trend information, the service channel is switched to a target channel, and the primary channel is changed to the target channel, where the target channel is one of at least one first candidate channel, and the second trend information indicates that channel quality of the primary channel after a current moment deteriorates to affect a service.

The current channel quality information being greater than the second threshold indicates that current channel quality is excellent. The current channel quality information being greater than the first threshold but less than the second threshold indicates that current channel quality is good. The current channel quality information being less than the first threshold indicates that current channel quality is poor.

Therefore, the current channel quality of the primary channel and the channel quality change trend of the primary channel are obtained, where the service channel is located on the primary channel. If the current channel quality of the primary channel is excellent, and the channel quality change trend of the primary channel is that the channel quality starts to deteriorate; or if the current channel quality of the primary channel is good, and the channel quality change trend of the primary channel is that the channel quality does not start to deteriorate, the service channel is switched to the one or more first candidate channels, to scan the one or more first candidate channels. After the scanning is completed, the service channel is switched back to the primary channel. In this way, the one or more first candidate channels may be scanned before the channel deteriorates to affect the service. This helps reduce impact of channel deterioration on service performance. If the current channel quality of the primary channel is poor, or the channel quality change trend of the primary channel is that the channel quality starts to deteriorate to affect the service, the service channel is switched to the target channel, and the primary channel is changed to the target channel. In this way, the primary channel may be switched before the channel deteriorates to affect the service. This helps reduce impact of channel deterioration on service performance.

For example, the channel quality information may be a channel quality score value, and may be specifically determined based on one or more first channel parameters. Correspondingly, the current channel quality information is a current channel quality score value, and the historical channel quality information is a historical channel quality score value.

In a possible design, the obtaining trend information of the primary channel based on the current channel quality information and at least one piece of historical channel quality information includes: inputting the current channel quality information and the at least one piece of historical channel quality information into a neural network model, to obtain the trend information of the primary channel output by the neural network model.

The neural network model is obtained through training based on a plurality of pieces of channel quality information and corresponding trend information.

Therefore, the channel quality change trend of the primary channel is predicted by using the neural network model, to improve accuracy of the channel quality change trend, and reduce operation complexity.

In a possible design, a candidate channel set of the primary channel includes a first candidate channel set and a second candidate channel set, the first candidate channel set includes the at least one first candidate channel, the second candidate channel set includes at least one second candidate channel, and channel quality information of any one of the at least one first candidate channel is greater than channel quality information of any one of the at least one second candidate channel.

The one or more first candidate channels are candidate channels with excellent or good channel quality. The excellent or good channel quality means that the channel quality is excellent or good.

Based on this, a candidate channel with excellent or good channel quality is scanned, and a candidate channel with poor channel quality is not scanned, so that impact of channel scanning on the service performance can be reduced. In this way, a problem of service transmission freezing caused by scanning the candidate channel with poor channel quality is avoided.

In a possible design, the channel quality information of any one of the at least one first candidate channel is greater than the first threshold.

In a possible design, the method further includes: updating a respective priority of the at least one first candidate channel based on the scanning result of the at least one first candidate channel, where the respective priority of the at least one first candidate channel is used to determine the target channel.

Therefore, a respective priority of the candidate channel with excellent or good channel quality is updated based on a scanning result of the candidate channel with excellent or good channel quality, to implement dynamic adjustment of the priority. This implements selecting of an optimal channel when channel interference changes, to improve service transmission performance.

In a possible design, the method further includes: predicting a scanning result of the at least one second candidate channel based on a scanning result of a first candidate channel that is in the first candidate channel set and whose frequency is adjacent to frequency of the at least one second candidate channel; and updating the first candidate channel set based on the scanning result of the at least one second candidate channel.

Therefore, the scanning result of the second candidate channel is predicted by using the first candidate channel (that is, the candidate channel with excellent or good channel quality) whose frequency is adjacent to the frequency of the second candidate channel (that is, the candidate channel with poor channel quality), and then the first candidate channel set may be updated based on the predicted scanning result. In this way, the candidate channel with poor channel quality is not scanned, but is predicted based on a spectrum correlation and an adjacent-channel scanning result, so that the impact of the channel scanning on the service performance can be reduced. In this way, the problem of the service transmission freezing caused by scanning the candidate channel with poor channel quality is avoided. In addition, dynamic adjustment of the candidate channel set may be implemented.

In a possible design, the method further includes: if it is detected that at least one second channel parameter exceeds a preset threshold, switching the service channel to the target channel, and changing the primary channel to the target channel.

Therefore, a warning may be generated in advance by determining a preset threshold of a key channel parameter. In addition, a problem that the neural network model cannot effectively identify a circumstance in which discrete burst interference occurs in an actual service running process may be resolved. Through threshold detection, a chip-level freezing warning may be implemented. Effectiveness of the chip-level freezing warning is far greater than that of a freezing warning in channel quality evaluation. This is beneficial to stability and reliability of data transmission in the service running process.

According to a second aspect, this application provides a channel switching apparatus. The channel switching apparatus may be an electronic device or a chip or a system-on-a-chip in an electronic device, or may be a functional module that is in an electronic device and that is configured to implement the method according to any one of the first aspect or the possible designs of the first aspect. The channel switching apparatus may implement a function in the first aspect or the possible designs of the first aspect, and the function may be implemented by hardware by executing corresponding software. The hardware or software includes one or more modules corresponding to the foregoing function. For example, the channel switching apparatus may include an obtaining module and a processing module.

The obtaining module is configured to: measure at least one first channel parameter of a primary channel, and determine current channel quality information of the primary channel based on the at least one first channel parameter, where a service channel is located on the primary channel, and the current channel quality information indicates current communication quality.

The obtaining module is further configured to obtain trend information of the primary channel based on the current channel quality information and at least one piece of historical channel quality information, where the trend information indicates a channel quality change trend, and the at least one piece of historical channel quality information is determined based on a channel parameter measured before the at least one first channel parameter.

The processing module is configured to selectively switch the service channel based on the current channel quality information and the trend information.

In a possible design, the processing module is configured to: if the current channel quality information and the trend information satisfy a first condition, switch the service channel to at least one first candidate channel to obtain a scanning result of the at least one first candidate channel, and switch the service channel back to the primary channel, where the first condition includes any one of the following: the current channel quality information is greater than a second threshold, and the trend information is first trend information; or the current channel quality information is greater than a first threshold but less than a second threshold, and the trend information is third trend information, where the first trend information indicates that channel quality of the primary channel after a current moment starts to deteriorate, and the third trend information indicates that the channel quality of the primary channel after the current moment remains unchanged; or if the current channel quality information is less than a first threshold and/or the trend information is second trend information, switch the service channel to a target channel, and change the primary channel to the target channel, where the target channel is one of at least one first candidate channel, and the second trend information indicates that channel quality of the primary channel after a current moment deteriorates to affect a service.

In a possible design, the obtaining module is configured to input the current channel quality information and the at least one piece of historical channel quality information into a neural network model, to obtain the trend information of the primary channel output by the neural network model.

The neural network model is obtained through training based on a plurality of pieces of channel quality information and corresponding trend information.

In a possible design, a candidate channel set of the primary channel includes a first candidate channel set and a second candidate channel set, the first candidate channel set includes the at least one first candidate channel, the second candidate channel set includes at least one second candidate channel, and channel quality information of any one of the at least one first candidate channel is greater than channel quality information of any one of the at least one second candidate channel.

In a possible design, the channel quality information of any one of the at least one first candidate channel is greater than the first threshold.

In a possible design, the processing module is further configured to update a respective priority of the at least one first candidate channel based on the scanning result of the at least one first candidate channel, where the respective priority of the at least one first candidate channel is used to determine the target channel.

In a possible design, the processing module is further configured to: predict a scanning result of the at least one second candidate channel based on a scanning result of a first candidate channel that is in the first candidate channel set and whose frequency is adjacent to frequency of the at least one second candidate channel, and update the first candidate channel set based on the scanning result of the at least one second candidate channel.

In a possible design, the processing module is further configured to: if it is detected that at least one second channel parameter exceeds a preset threshold, switch the service channel to the target channel, and change the primary channel to the target channel.

According to a third aspect, this application provides a channel switching apparatus, including at least one processor and an interface, where the interface is configured to input and/or output a signal. For example, the interface is configured to: receive a signal from an apparatus other than the channel switching apparatus, and transmit the signal to the processor; and/or the interface is configured to send a signal from the processor to the apparatus other than the channel switching apparatus. The processor is configured to enable the channel switching apparatus to perform the foregoing method. For example, the processor implements any method in the first aspect through a logic circuit and/or by executing program instructions.

Optionally, the apparatus may be a chip or an integrated circuit in the electronic device in the first aspect.

Optionally, the channel switching apparatus may further include at least one memory, and the memory stores program instructions. The processor is coupled to the at least one memory, and is configured to execute a program, to implement the foregoing method designs.

According to a fourth aspect, this application provides a channel switching apparatus. The apparatus has a component (component), a module (module), a unit (unit), or a means (means) for implementing any method in the method in any one of the first aspect and the possible designs of the first aspect. The apparatus may be implemented by hardware, software, firmware, or any combination thereof. For example, the apparatus may be implemented by hardware by executing corresponding software. The hardware or software includes one or more corresponding units (modules) configured to implement the foregoing method design, for example, includes a transceiver unit and a processing unit.

According to a fifth aspect, this application provides an electronic device. The electronic device includes one or more processors, and a memory, configured to store one or more programs. When the one or more programs are executed by the one or more processors, the one or more processors are enabled to implement the method according to any one of the first aspect.

According to a sixth aspect, this application provides a computer-readable storage medium. The computer-readable storage medium stores program instructions. When the program instructions are run by a processor, the method in any one of the first aspect and the possible designs of the first aspect is implemented.

According to a seventh aspect, this application provides a computer program product. The computer program product includes program instructions. When the program instructions are executed by a processor, the method in any one of the first aspect and the possible designs of the first aspect is implemented.

According to an eighth aspect, this application further provides a chip. The chip is configured to implement the method in any one of the first aspect and the possible designs of the first aspect.

It should be understood that the technical solutions in the second aspect to the eighth aspect of this application are consistent with the technical solutions in the first aspect of this application, beneficial effects achieved by the aspects and corresponding feasible implementations are similar. Details are not described again.

## BRIEF DESCRIPTION OF DRAWINGS

The following describes solutions provided in this application in detail with reference to accompanying drawings. Features or content denoted by dashed lines in the accompanying drawings may be understood as optional operations or optional structures in embodiments of this application.

FIG. 1 is a diagram of an application scenario according to an embodiment of this application;
FIG. 2 is a diagram of a periodic service major time slice and scanning time slice according to an embodiment of this application;
FIG. 3 is a flowchart of a channel switching method according to an embodiment of this application;
FIG. 4 is a diagram of a channel switching apparatus 40 and a Wi-Fi chip 50 according to an embodiment of this application;
FIG. 5 is a diagram of scanning candidate channels according to an embodiment of this application;
FIG. 6 is a flowchart of a channel switching method according to an embodiment of this application;
FIG. 7 is a diagram of primary channel switching controlled by a Wi-Fi chip according to an embodiment of this application;
FIG. 8A and FIG. 8B are a flowchart of a channel switching method according to an embodiment of this application;
FIG. 9 is a diagram of a channel switching apparatus 900 according to an embodiment of this application;
FIG. 10 is a diagram of a structure of a channel switching apparatus 1000 according to an embodiment of this application; and
FIG. 11 is a diagram of a structure of an electronic device 11 (for example, a mobile phone) according to an embodiment of this application.

## DESCRIPTION OF EMBODIMENTS

The following describes a channel switching method and an apparatus provided in embodiments of this application in detail with reference to the accompanying drawings.

It should be noted that, in embodiments of this application, the term "example", "for example", or the like indicates giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

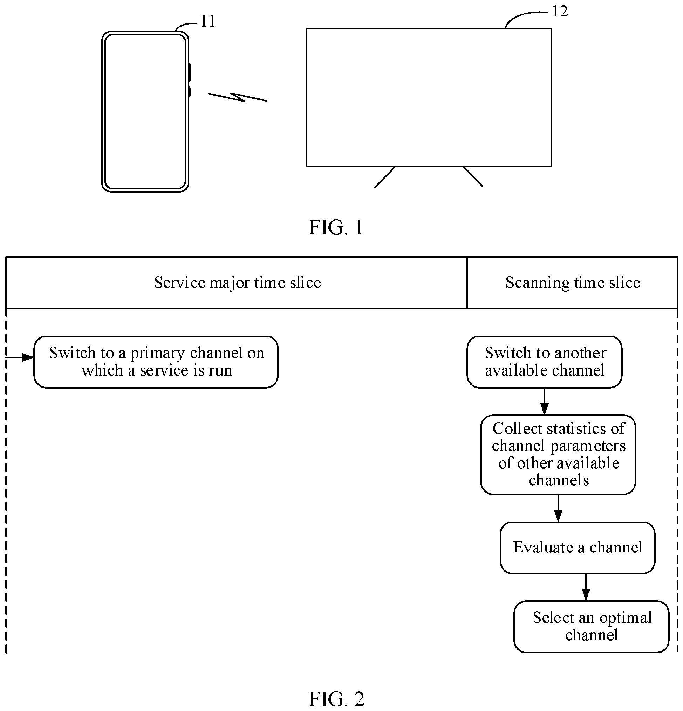

FIG. 1 is a diagram of an application scenario according to an embodiment of this application. As shown in FIG. 1, the application scenario may include an electronic device 11 and an electronic device 12. For example, the electronic device 11 and the electronic device 12 may communicate with each other by using a short-range wireless transmission technology. For example, a P2P connection is established via Wi-Fi, and information transmission is further performed over the established P2P connection. In other words, this is a communication mode in which one or more of a text, a picture, an audio, a video, or control information is transmitted in real time via Wi-Fi. In a process in which the electronic device 11 performs Wi-Fi communication with the electronic device 12, a channel switching method in embodiments of this application may be used, to implement dynamic adjustment of a service channel. This helps reduce interference from another electronic device, and improve stability and reliability of data transmission over the P2P connection.

A plurality of other electronic devices usually exist in space in which the electronic device 11 and the electronic device 12 are located, and the other electronic devices cause interference to the Wi-Fi communication between the electronic device 11 and the electronic device 12. Therefore, interference from the other electronic devices needs to be reduced. Specifically, a frequency band used for the Wi-Fi communication is 2.4 GHz or 5 GHz. The frequency band is divided into a plurality of channels. Before establishing the P2P connection, the electronic device 11 or the electronic device 12 may select an optimal channel from the plurality of channels by using an evaluation algorithm, to avoid problems such as a decrease in a network throughput and a longer data transmission delay caused by use of a channel with large interference. 2.4 GHz is used as an example. The frequency band may be divided into 13 channels. Before the P2P connection is established, the electronic device 11 or the electronic device 12 may scan all channels to obtain a channel parameter of each channel, further obtain an optimal channel through evaluation based on the channel parameter of each channel, and use the optimal channel as a primary channel on which a service is running. Because interference around the electronic device 11 and the electronic device 12 changes dynamically, channel deterioration occurs on the primary channel in a service running process. This further affects performance of data transmission between the electronic device 11 and the electronic device 12. To resolve a problem of the channel deterioration occurring on the primary channel in the service running process, a time slicing technology may be used to complete, within a periodic idle time slice, channel switching, channel parameter statistics collection, and dynamic adjustment of the primary channel on which the service is running. For example, FIG. 2 is a diagram of a periodic service major time slice and scanning time slice according to an embodiment of this application. As shown in FIG. 2, in the service running process, the service major time slice and the scanning time slice are obtained through segmentation. In the service major time slice, a service channel is switched to a primary channel on which a service is running. In other words, in the service major time slice, the service channel is located on the primary channel on which the service is running. In the service major time slice, statistics of a channel parameter of the primary channel may be collected. In the scanning time slice, the service channel is switched to another available channel to traverse other available channels and collect statistics of channel parameters of the other available channels. Further, advantages and disadvantages of the primary channel and the other available channels may be evaluated based on the channel parameter of the primary channel and the channel parameters of the other available channels, to implement dynamic adjustment of the primary channel. Therefore, in most of the time of the service running process, a service is running on an optimal channel. In this way, a problem of deterioration of the primary channel in the service running process can be significantly alleviated.

According to the channel switching method in embodiments of this application, on a basis of implementing the dynamic adjustment of the service channel, problems such as a performance loss caused by frequent service channel switching, and in a performance-sensitive scenario (such as a game projection scenario), instantaneous performance deterioration caused by unnecessary freezing introduced when switching is performed to a channel with poor performance for scanning can be further resolved. According to the channel switching method in embodiments of this application, freezing-free adaptive switching between channels can be implemented, thereby improving the stability and the reliability of the data transmission over the P2P connection. For a specific implementation, refer to explanations and descriptions in the following embodiments.

The electronic device 11 and the electronic device 12 communicate with each other via Wi-Fi, and may perform various services, including but not limited to any one of an audio and video playing projection service, a game projection service, a multi-device collaboration service, or a file transfer service. The multi-device collaboration service may include a service of collaboration between different electronic devices, such as multi-screen collaboration.

For example, in FIG. 1, an example in which the electronic device 11 is a mobile phone and the electronic device 12 is a smart screen is used for description. Specific forms of the electronic device 11 and the electronic device are not limited to those shown in FIG. 1.

Some terms in embodiments of this application are first described, to facilitate understanding of the channel switching method in embodiments of this application.

The primary channel on which the service is running is a channel used in most of the time in a process in which various services are performed through Wi-Fi communication. For example, a time length of the service major time slice shown in FIG. 2 is greater than a time length of the scanning time slice. For example, the time length of the service major time slice may be 900 milliseconds (ms), and the time length of the scanning time slice may be 100 ms. The service channel in the service major time slice is the primary channel on which the service is running. For example, the 2.4 GHz frequency band includes 13 channels: a channel 1, a channel 2, ..., a channel 12, and a channel 13, and the primary channel on which the service is running may be the channel 1.

In embodiments of this application, the primary channel on which the service is running is also referred to as a primary channel for short.

A candidate channel is an available channel other than the primary channel in the process in which the various services are performed through the Wi-Fi communication. For example, the service channel in the scanning time slice shown in FIG. 2 is the candidate channel. An example in which the channel 1 is the primary channel on which the service is running is used for further description. The candidate channel may be the channel 2, ..., the channel 12, or the channel 13.

A set including a plurality of candidate channels is also referred to as a candidate channel set. For example, the candidate channel set includes the channel 2, ..., the channel 12, and the channel 13.

The service channel is a channel used to perform information transmission in the service running process, that is, a channel actually used in the service running process. The service channel may be switched to the primary channel, or may be switched to the candidate channel. Duration in which the service channel is located on the primary channel is greater than duration in which the service channel is located on the candidate channel.

The channel parameter is a parameter that is of a Wi-Fi communication channel and that is obtained by scanning, and includes but is not limited to a signal-to-noise ratio (signal-to-noise ratio, SNR), a signal to interference plus noise ratio (Signal to Interference plus Noise Ratio, SINR), channel load saturation, a quantity of access points, an air interface delay, an accumulated quantity of packets, or the like. For ease of description, in embodiments of this application, the channel parameter is classified into a first channel parameter and a second channel parameter. The first channel parameter is used to calculate channel quality information. The first channel parameter includes but is not limited to an SNR, an SINR, channel load saturation, a quantity of access points, or the like. The second channel parameter is used for threshold exception detection. The second channel parameter includes but is not limited to an air interface delay, an accumulated quantity of packets, or the like.

The channel quality information indicates communication quality of a channel, and may be obtained by mapping by using one or more first channel parameters such as the SNR, the SINR, the channel load saturation, and the quantity of access points. For example, the channel quality information may be a channel quality score value, that is, a value. A larger value indicates better channel communication quality.

The electronic device in embodiments of this application is a device having a system (for example, an operating system). The electronic device includes one or more applications. The electronic device in embodiments of this application may be a mobile phone (mobile phone), a tablet computer (Pad), a computer with a wireless transceiver function, a virtual reality (Virtual Reality, VR) terminal device, an augmented reality (Augmented Reality, AR) terminal device, a terminal device in industrial control (industrial control), an assisted driving terminal device, a terminal device in self driving (self driving), a terminal device in remote medical surgery (remote medical surgery), a terminal device in a smart grid (smart grid), a terminal device in transportation safety (transportation safety), a terminal device in a smart city (smart city), a terminal device in a smart home (smart home), a smart watch, a smart band, smart glasses, another sports accessory or wearable device, and the like. For example, the terminal device in the smart home (smart home) may be a smart home appliance such as a smart television or a smart speaker.

A system carried in the electronic device may be iOS®, Android®, Microsoft®, HarmonyOS, or another system. This is not limited in embodiments of this application.

The electronic device may be logically divided into a hardware layer, a system layer, and an application layer. The hardware layer includes hardware resources such as a wireless fidelity (wireless fidelity, Wi-Fi) module, a Bluetooth (Bluetooth) module, a processor, a memory, a display unit, an input unit, an audio circuit, a sensor, a camera, and a positioning module. The application layer includes one or more applications, and the application may be an application of any type such as a social application, an e-commerce application, or a browser. The system layer serves as software middleware between the hardware layer and the application layer, and is a computer program for managing and controlling hardware and software resources.

The following uses specific embodiments to explain and describe the channel switching method in embodiments of this application.

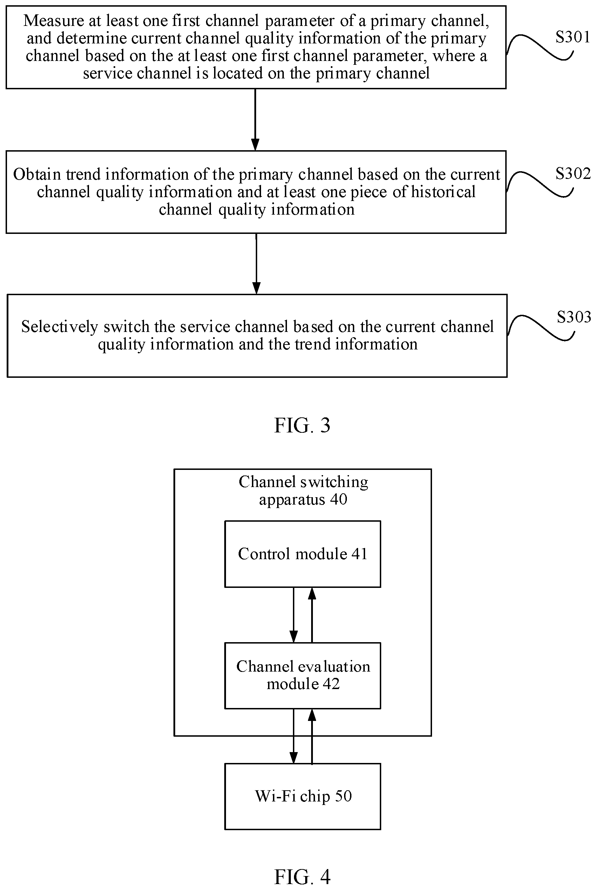

FIG. 3 is a flowchart of a channel switching method according to an embodiment of this application. An entity for executing this embodiment of this application may be a channel switching apparatus. The channel switching apparatus may be a functional module at the foregoing system layer. The channel switching apparatus may be implemented via any electronic device or an internal chip of any electronic device in the foregoing embodiments, for example, an internal chip of an electronic device 11 or an electronic device 12. As shown in FIG. 3, the method in this embodiment may include the following steps.

S301: Measure at least one first channel parameter of a primary channel, and determine current channel quality information of the primary channel based on the at least one first channel parameter, where a service channel is located on the primary channel.

The current channel quality information indicates current communication quality.

Before S301, the entity for executing this embodiment has established a P2P connection based on an optimal channel. Before the P2P connection is established, the entity for executing this embodiment may scan all channels to obtain a channel parameter of each channel, further obtain the optimal channel through evaluation based on the channel parameter of each channel, and use the optimal channel as a primary channel on which a service is running. After the P2P connection is established, the service channel may be dynamically switched by using the channel switching method in this embodiment.

The current channel quality information may be channel quality information that is of the primary channel and that is obtained based on currently measured one or more first channel parameters of the primary channel. The first channel parameter includes but is not limited to an SNR, an SINR, channel load saturation, a quantity of access points, or the like.

For example, the one or more first channel parameters of the primary channel may be measured based on scanning frequency of the primary channel, and the current channel quality information of the primary channel is determined based on the one or more first channel parameters. The scanning frequency may be initial scanning frequency, or may be scanning frequency updated based on channel quality information determined in previous scanning.

S302: Obtain trend information of the primary channel based on the current channel quality information and at least one piece of historical channel quality information.

The trend information indicates a channel quality change trend. One or more pieces of historical channel quality information are determined based on a channel parameter measured before the one or more first channel parameters.

The trend information of the primary channel is a predicted change direction of the primary channel at a future moment, and may indicate whether channel quality of the primary channel after a current moment is better than current channel quality. For example, the trend information of the primary channel may include first trend information, second trend information, or third trend information. The first trend information indicates that the channel quality of the primary channel after the current moment starts to deteriorate, that is, is worse than the current channel quality. The second trend information indicates that the channel quality of the primary channel after the current moment deteriorates to affect a service. The third trend information indicates that the channel quality of the primary channel after the current moment remains unchanged, that is, is the same as the current channel quality. Certainly, it may be understood that the trend information of the primary channel may further include fourth trend information. The fourth trend information indicates that the channel quality of the primary channel after the current moment starts to become better. Because this embodiment of this application is mainly for channel switching, the channel quality change trend of the primary channel with the first trend information, the second trend information, or the third trend information is mainly obtained through prediction, and then corresponding processing is performed by using the following S303. A manner of processing the fourth trend information is not specifically limited in this embodiment of this application.

The trend information of the primary channel may be obtained based on the current channel quality information of the primary channel and the one or more pieces of historical channel quality information of the primary channel. Different from the current channel quality information, the historical channel quality information may be channel quality information of the primary channel obtained based on one or more first channel parameters of the primary channel that are obtained before the current moment.

For example, the trend information of the primary channel, that is, the channel quality change trend, may be predicted by using a neural network model. Specifically, the current channel quality information of the primary channel and the one or more pieces of historical channel quality information of the primary channel may be input into the neural network model, to obtain the trend information of the primary channel output by the neural network model. The neural network model is obtained through training based on a plurality of pieces of channel quality information and corresponding trend information. In other words, training data of the neural network model includes the plurality of pieces of channel quality information and the corresponding trend information. Through training of the training data, the neural network model has a function of predicting the channel quality change trend.

The neural network model may be a multi-layer perceptron (Multi-layer Perceptron, MLP), a convolutional neural network (Convolutional Neural Network, CNN), or the like, and the neural network model may be properly set based on a requirement.

For example, an input of the neural network model may be

$$c_1^T = \{c_1, c_2, \cdots, c_t, \cdots, c_T\}$$

. $c_1$ indicates the current channel quality information, and $c_2$, ..., $c_T$ indicates (T-1) pieces of historical channel quality information. The (T-1) pieces of historical channel quality information may be obtained through measurement and calculation at an interval of 10s.

S303: Selectively switch the service channel based on the current channel quality information and the trend information.

The service channel is selectively switched, to implement dynamic adjustment of the service channel. This improves stability and reliability of data transmission over the P2P connection.

For example, selectively switching the service channel may include switching the service channel to at least one first candidate channel to obtain a scanning result of the at least one first candidate channel, and switching the service channel back to the primary channel, that is, scanning one or more first candidate channels. Alternatively, selectively switching the service channel may include switching the service channel to a target channel, and changing the primary channel to the target channel.

The target channel is one of at least one first candidate channel. For example, if there are a plurality of first candidate channels, the target channel may be a channel with best channel quality in the plurality of first candidate channels.

The one or more first candidate channels are scanned, to obtain one or more first channel parameters of the one or more first candidate channels. For example, FIG. 4 is a diagram of a channel switching apparatus 40 and a Wi-Fi chip 50 according to an embodiment of this application. As shown in FIG. 4, a control module 41 in the channel switching apparatus 40 may control the Wi-Fi chip to scan the one or more first candidate channels. The one or more first channel parameters of the one or more first candidate channels is reported to an upper-layer module (for example, a channel evaluation module 42 in this embodiment). The channel evaluation module 42 performs channel quality evaluation. The channel evaluation module 42 reports channel quality information of the one or more first candidate channels to the control module 41 in the channel switching apparatus 40. Further, the control module 41 updates a respective priority of the one or more first candidate channels, so that the target channel may be selected based on an updated priority if channel quality of the primary channel deteriorates to affect the service subsequently.

In a process of scanning the one or more first candidate channels, transmission of information (to be specific, information transmitted between two electronic devices) in a service running process is also performed through the currently scanned first candidate channel. For example, four first candidate channels are respectively a channel 2, a channel 3, a channel 4, and a channel 5. When the channel 2 is scanned, the service channel is switched to the channel 2, and data transmission is performed through the channel 2. Similarly, when the channel 3 is scanned, the service channel is switched to the channel 3, and data transmission is performed through the channel 3. The channel 4 and the channel 5 are scanned in sequence. One or more first channel parameters of the channel 2, one or more first channel parameters of the channel 3, one or more first channel parameters of the channel 4, and one or more first channel parameters of the channel 5 may be obtained, and further, channel quality of the channel 2, channel quality of the channel 3, channel quality of the channel 4, and channel quality of the channel 5 may be obtained. After the one or more first candidate channels are scanned, the service channel is switched back to the primary channel. For example, the primary channel is a channel 1.

In this embodiment of this application, candidate channels other than the primary channel may be further divided into two candidate channel sets: a first candidate channel set and a second candidate channel set. The first candidate channel set includes the foregoing one or more first candidate channels. The second candidate channel set includes one or more second candidate channels. Channel quality information of any first candidate channel is greater than channel quality information of any second candidate channel. The first candidate channel set may also be referred to as a set of candidate channels with excellent or good channel quality, and the second candidate channel set may also be referred to as a set of candidate channels with poor channel quality. In this embodiment of this application, the second candidate channel in the second candidate channel set is not scanned. In this way, especially for a performance-sensitive service scenario, a freezing problem caused by switching the service channel to the second candidate channel with poor channel quality can be avoided.

A quantity of first candidate channels in the first candidate channel set and a quantity of second candidate channels in the second candidate channel set are related to interference caused by another electronic device to two electronic devices between which a P2P connection is established.

For example, four first candidate channels included in the first candidate channel set are respectively the channel 2, the channel 3, the channel 4, and the channel 5, and eight second candidate channels included in the second candidate channel set are respectively a channel 6, a channel 7, a channel 8, a channel 9, a channel 10, a channel 11, a channel 12, and a channel 13. The one or more first candidate channels are scanned, in other words, the channel 2, the channel 3, the channel 4, and the channel 5 are scanned, but the channel 6, the channel 7, the channel 8, the channel 9, the channel 10, the channel 11, the channel 12, and the channel 13 are not scanned.

In some embodiments, the channel quality information of any first candidate channel is greater than a first threshold. The first threshold may be properly set based on a requirement. For example, if a service scenario is the performance-sensitive service scenario, for example, a game projection service, a relatively high first threshold may be set. If the service scenario is a performance-insensitive service scenario, for example, a file transfer service, a relatively low first threshold may be set. A value of the first threshold is not specifically limited in this embodiment of this application. The first candidate channel may also be referred to as a candidate channel with excellent or good channel quality.

It should be further noted that two candidate channel sets are used as an example for description in this embodiment of this application. It may be understood that the candidate channels other than the primary channel may be further divided into more sets. This is not specifically limited in this embodiment of this application.

In this embodiment of this application, the candidate channels with excellent or good channel quality may be further distinguished. For example, a second threshold is set, where the second threshold is greater than the first threshold. A candidate channel whose channel quality information is greater than the second threshold is a candidate channel with excellent channel quality, and a candidate channel whose channel quality information is greater than the first threshold but less than the second threshold is a candidate channel with good channel quality.

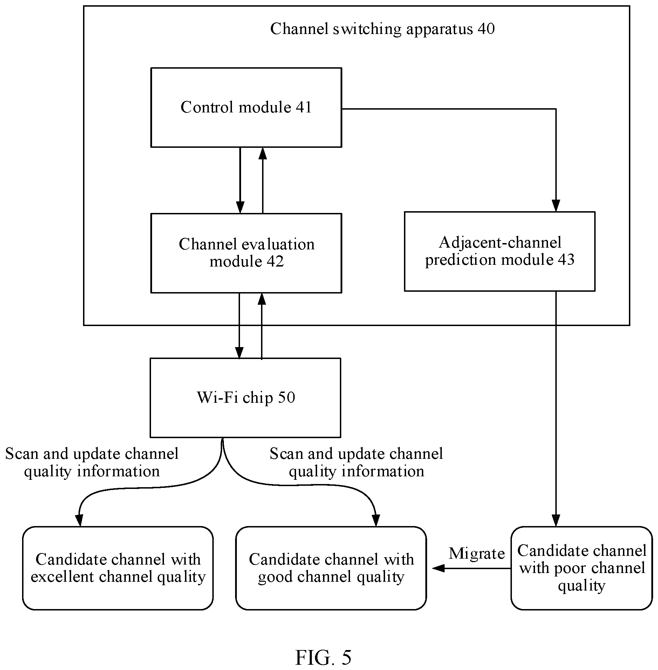

For example, FIG. 5 is a diagram of scanning candidate channels according to an embodiment of this application. As shown in FIG. 5, the control module 41 may control the Wi-Fi chip to scan the candidate channel with excellent channel quality and the candidate channel with good channel quality, but not to scan the candidate channel with poor channel quality. The channel switching apparatus in this embodiment of this application may further include an adjacent-channel prediction module 43. The control module 41 may control the adjacent-channel prediction module 43 to predict channel quality of the candidate channel with poor channel quality, in other words, predict channel quality of the foregoing one or more second candidate channels. For example, the adjacent-channel prediction module 43 may predict channel quality information of the candidate channel with poor channel quality based on a candidate channel with excellent or good channel quality adjacent to the candidate channel with poor channel quality in frequency. When the predicted channel quality information is greater than the first threshold, the first candidate channel set may be updated, in other words, the candidate channel is migrated to the set of the candidate channels with excellent channel quality or the set of the candidate channels with good channel quality.

In this embodiment, the current channel quality information of the primary channel and the trend information of the primary channel are obtained, where the service channel is located on the primary channel. The service channel is selectively switched based on the current channel quality information of the primary channel and the trend information of the primary channel. A change direction of the channel quality of the primary channel may be learned in advance based on the trend information of the primary channel, so that the service channel is selectively switched in advance. This helps avoid a problem of service transmission freezing caused by channel quality deterioration.

The one or more first candidate channels are the candidate channels with excellent or good channel quality. The candidate channel with excellent or good channel quality is scanned, and the candidate channel with poor channel quality is not scanned, so that impact of channel scanning on service performance can be reduced. In this way, a problem of service transmission freezing caused by scanning the candidate channel with poor channel quality is avoided.

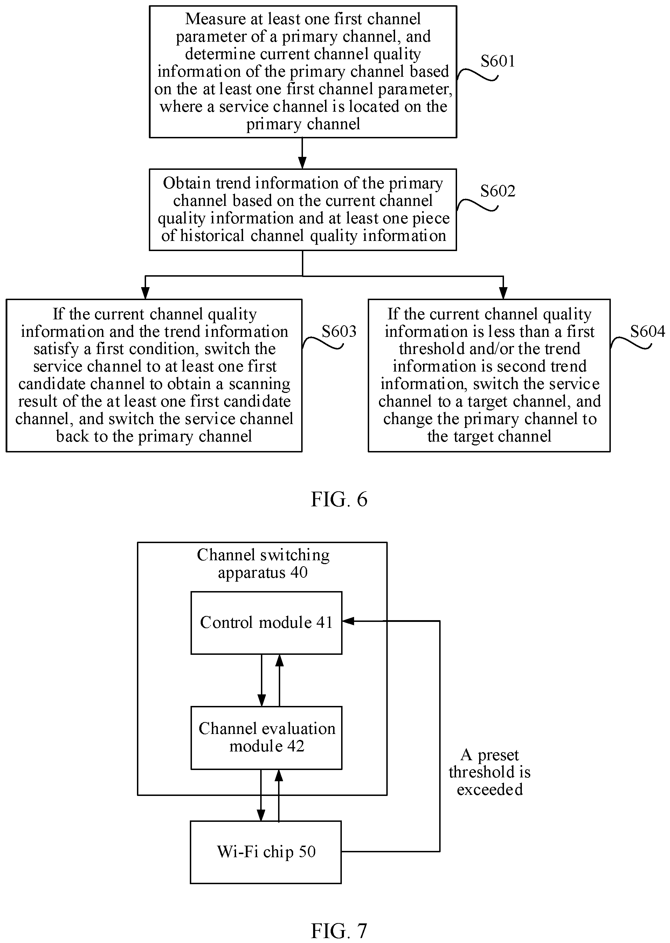

FIG. 6 is a flowchart of a channel switching method according to an embodiment of this application. An entity for executing this embodiment of this application may be a channel switching apparatus. The channel switching apparatus may be a functional module at the foregoing system layer. The channel switching apparatus may be implemented via any electronic device or an internal chip of any electronic device in the foregoing embodiments, for example, an internal chip of an electronic device 11 or an electronic device 12. As shown in FIG. 6, the method in this embodiment may include the following steps.

S601: Measure at least one first channel parameter of a primary channel, and determine current channel quality information of the primary channel based on the at least one first channel parameter, where a service channel is located on the primary channel.

S602: Obtain trend information of the primary channel based on the current channel quality information and at least one piece of historical channel quality information.

For specific descriptions of steps 601 and S602, refer to specific descriptions of steps S301 and S302 in the embodiment shown in FIG. 3. Details are not described herein again.

After S602 is performed, S603 or S604 may be performed.

S603: If the current channel quality information and the trend information satisfy a first condition, switch the service channel to at least one first candidate channel to obtain a scanning result of the at least one first candidate channel, and switch the service channel back to the primary channel.

In other words, if the current channel quality information and the trend information satisfy the first condition, one or more first candidate channels are scanned, and after scanning of the one or more first candidate channels is completed, the service channel is switched back to the primary channel.

For descriptions of scanning the one or more first candidate channels, refer to related descriptions of S303 in the embodiment shown in FIG. 3. Details are not described herein again.

The first condition includes any one of the following: the current channel quality information of the primary channel is greater than a second threshold, and the trend information of the primary channel is first trend information; or the current channel quality information of the primary channel is greater than a first threshold but less than a second threshold, and the trend information of the primary channel is third trend information. The current channel quality information being greater than the second threshold indicates that current channel quality is excellent. The current channel quality information being greater than the first threshold but less than the second threshold indicates that current channel quality is good. In other words, if the current channel quality of the primary channel is excellent, and a channel quality change trend of the primary channel is that the channel quality starts to deteriorate; or if the current channel quality of the primary channel is good, and a channel quality change trend of the primary channel is that the channel quality does not start to deteriorate, the one or more first candidate channels are scanned. In this way, the one or more first candidate channels may be scanned before the channel deteriorates to affect a service. This helps reduce impact of channel deterioration on service performance.

For example, after the one or more first candidate channels are scanned, a first channel parameter and/or a second channel parameter of the one or more first candidate channels may be obtained. The first channel parameter and/or the second channel parameter of the one or more first candidate channels may be used as a scanning result of the one or more first candidate channels. Alternatively, channel quality information of the one or more first candidate channels may be obtained based on the first channel parameter of the one or more first candidate channels, and the channel quality information of the one or more first candidate channels is used as a scanning result of the one or more first candidate channels. In addition, a respective priority of the one or more first candidate channels are updated based on the scanning result of the one or more first candidate channels. The foregoing four first candidate channels being respectively a channel 2, a channel 3, a channel 4, and a channel 5 is used as an example for further description. Priorities of the first candidate channels before update are shown in Table 1.

**Table 1 Priority list before update**

| Channel | Priority |
|---|---|
| Channel 2 | $P_2$ |
| Channel 3 | $P_3$ |
| Channel 4 | $P_4$ |
| Channel 5 | $P_5$ |

$P_2 > P_3 > P_4 > P_5$, in other words, channel quality of the channel 2, channel quality of the channel 3, channel quality of the channel 4, and channel quality of the channel 5 are successively better than the latter. After the one or more first candidate channels are scanned based on the current channel quality information of the primary channel and the trend information of the primary channel, a respective priority of the one or more first candidate channels may be updated based on the scanning result of the one or more first candidate channels. For example, updated priorities of the first candidate channels are shown in Table 2.

**Table 2 Priority list after update**

| Channel | Priority |
|---|---|
| Channel 5 | $P_5{'}$ |
| Channel 4 | $P_4{'}$ |
| Channel 2 | $P_2{'}$ |
| Channel 3 | $P_3{'}$ |

$P_5{'} > P_4{'} > P_2{'} > P_3{'}$, in other words, channel quality of the channel 5, channel quality of the channel 4, channel quality of the channel 2, and channel quality of the channel 3 are successively better than the latter. Then, if the primary channel needs to be switched, the channel 5 is selected as a target channel, that is, the channel 5 is a current optimal channel.

For example, eight second candidate channels included in a second candidate channel set are respectively a channel 6, a channel 7, a channel 8, a channel 9, a channel 10, a channel 11, a channel 12, and a channel 13, where the channel 6 is adjacent to the channel 5 in frequency. Therefore, a scanning result of the channel 6 can be predicted based on a scanning result of the channel 5. For example, if the channel quality of the channel 5 becomes better, predicted channel quality of the channel 6 also becomes better. When channel quality information of the channel 6 is greater than the first threshold, the channel 6 may be migrated to a first candidate channel set.

S604: If the current channel quality information is less than a first threshold and/or the trend information is second trend information, switch the service channel to a target channel, and change the primary channel to the target channel.

In other words, if current channel quality of the primary channel is poor, or a channel quality change trend of the primary channel is that channel quality starts to deteriorate to affect a service, the service channel is switched to the target channel. In this way, the primary channel may be switched before the channel deteriorates to affect the service. This helps reduce impact of channel deterioration on service performance.

In some embodiments, in this embodiment of this application, whether one or more second channel parameters of the primary channel exceed a preset threshold may be further detected. If it is detected that the one or more second channel parameters exceed the preset threshold, the primary channel is switched to the target channel. For example, FIG. 7 is a diagram of primary channel switching controlled by a Wi-Fi chip according to an embodiment of this application. As shown in FIG. 7, the Wi-Fi chip may compare the preset threshold with the one or more second channel parameters of the primary channel obtained by scanning. When the preset threshold is exceeded, a control module 41 is directly notified, so that the control module 41 controls switching of the primary channel to the target channel. In this process, a channel evaluation module 42 does not need to perform channel quality evaluation. The second channel parameter herein may include but is not limited to an air interface delay, an accumulated quantity of packets, or the like. Different preset thresholds may be set for different second channel parameters, so that the primary channel is switched to the target channel when any preset threshold is exceeded. A warning may be generated in advance by determining a preset threshold of a key channel parameter. In addition, a problem that a neural network model cannot effectively identify a circumstance in which discrete burst interference occurs in an actual service running process may be resolved.

In this embodiment, the current channel quality of the primary channel and the channel quality change trend of the primary channel are obtained, where the service channel is located on the primary channel. If the current channel quality of the primary channel is excellent, and the channel quality change trend of the primary channel is that the channel quality starts to deteriorate; or if the current channel quality of the primary channel is good, and the channel quality change trend of the primary channel is that the channel quality does not start to deteriorate, the service channel is switched to the one or more first candidate channels, to scan the one or more first candidate channels. After the scanning is completed, the service channel is switched back to the primary channel. In this way, the one or more first candidate channels may be scanned before the channel deteriorates to affect the service. This helps reduce the impact of the channel deterioration on the service performance. If the current channel quality of the primary channel is poor, or the channel quality change trend of the primary channel is that the channel quality starts to deteriorate to affect the service, the service channel is switched to the target channel, and the primary channel is changed to the target channel. In this way, the primary channel may be switched before the channel deteriorates to affect the service. This helps reduce the impact of the channel deterioration on the service performance.

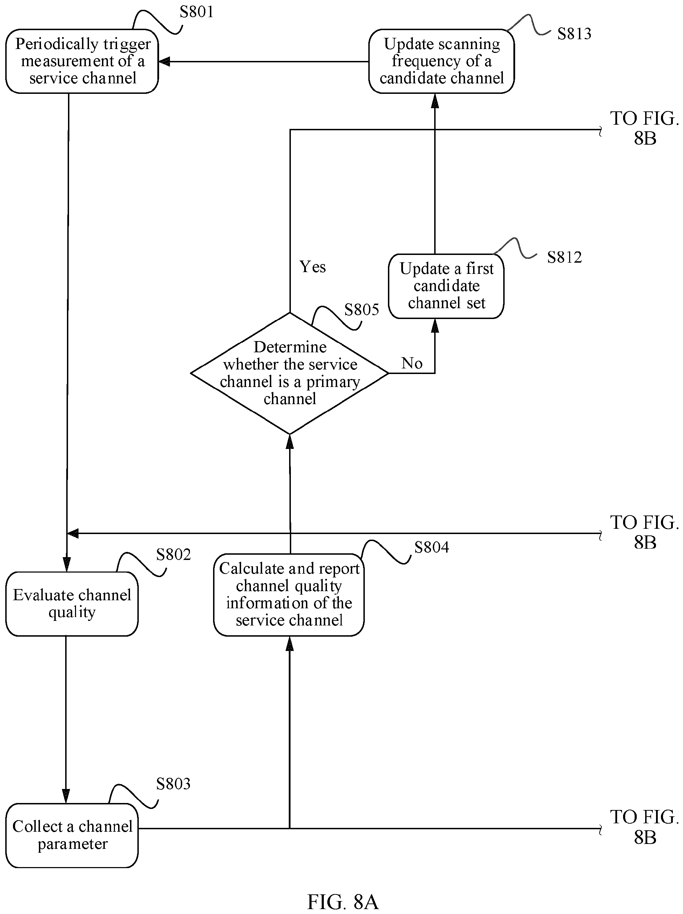

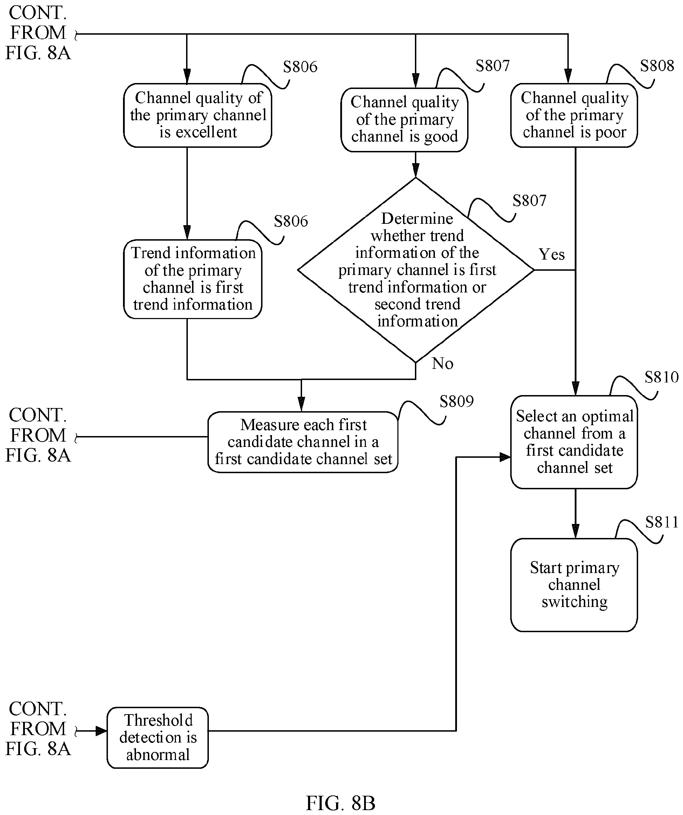

FIG. 8A and FIG. 8B are a flowchart of a channel switching method according to an embodiment of this application. An entity for executing this embodiment of this application may be a channel switching apparatus. The channel switching apparatus may be a functional module at the foregoing system layer. The channel switching apparatus may be implemented via any electronic device or an internal chip of any electronic device in the foregoing embodiments, for example, an internal chip of an electronic device 11 or an electronic device 12. As shown in FIG. 8A and FIG. 8B, the method in this embodiment may include the following steps.

S801: Periodically trigger measurement of a service channel.

The service channel may be located on a primary channel or a first candidate channel.

Before S801, the entity for executing this embodiment may further select an optimal channel from a plurality of channels by using an evaluation algorithm before establishing a P2P connection, use the optimal channel as the primary channel, and establish the P2P connection. Initial scanning frequency is set based on channel quality of the primary channel. Other channels are classified into a first candidate channel set and a second candidate channel set based on channel quality of the other channels other than the primary channel in the plurality of channels. The first candidate channel set includes a channel with excellent or good channel quality, and the first candidate channel set includes a channel with poor channel quality.

For example, a control module 41 may notify a channel evaluation module 42 to measure the service channel.

S802: Evaluate channel quality.

The channel evaluation module 42 may notify a Wi-Fi chip 50 to collect a channel parameter.

S803: Collect the channel parameter.

The Wi-Fi chip 50 may collect one or more first channel parameters of the service channel, and report the one or more first channel parameters to the channel evaluation module 42. Threshold detection may be further performed by the Wi-Fi chip 50, and S810 is performed when one or more second channel parameters exceed a preset threshold (that is, the threshold detection is abnormal).

S804: Calculate and report channel quality information of the service channel.

The channel evaluation module 42 may calculate the channel quality information of the service channel based on the one or more first channel parameters reported by the Wi-Fi chip 50, and report the channel quality information to the control module 41.

S805: Determine whether the service channel is the primary channel; and if the service channel is the primary channel, perform S806, S807, or S808; or if the service channel is not the primary channel, perform S812.

The control module 41 may determine whether the service channel is the primary channel. When the service channel is the primary channel, S806, S807, or S808 may be performed.

S806: If the channel quality of the primary channel is excellent, and trend information of the primary channel is first trend information, perform S809.

S807: If the channel quality of the primary channel is good, determine whether trend information of the primary channel is first trend information or second trend information; and if the trend information of the primary channel is not the first trend information or the second trend information, perform S809; or if the trend information of the primary channel is the first trend information or the second trend information, perform S810.

For descriptions of the trend information, refer to related descriptions in the foregoing embodiments. Details are not described herein again.

S808: If the channel quality of the primary channel is poor, perform S810.

S809: Measure each first candidate channel in the first candidate channel set.

The control module 41 may notify the channel evaluation module 42 to measure each first candidate channel in the first candidate channel set. In other words, after S809, S802 is performed. The service channel is switched to each first candidate channel, to measure each first candidate channel.

S810: Select the optimal channel from the first candidate channel set.

For example, a channel with best channel quality is selected from the first candidate channel set as the optimal channel.

S811: Start primary channel switching.

The primary channel is switched to the optimal channel.

In this embodiment of this application, scanning frequency of the primary channel may be further updated based on channel quality of the primary channel obtained by switching. For example, if the channel quality of the primary channel obtained by switching is good, the scanning frequency of the primary channel may be reduced; or if the channel quality of the primary channel obtained by switching is not good, the scanning frequency of the primary channel may be increased, to adjust the primary channel in time.

S812: Update the first candidate channel set.

For example, a priority of each first candidate channel is updated based on measured channel quality of each first candidate channel. In this embodiment of this application, channel quality of one or more second candidate channels may be further predicted based on an adjacent-channel correlation of the channels, and when a prediction result is excellent or good, a corresponding second candidate channel is migrated to the first candidate channel set.

S813: Update scan frequency of a candidate channel.

For example, if a channel with good channel quality exists in measured first candidate channels, the scanning frequency of the candidate channel may be reduced; or if a channel with good channel quality does not exist, the scanning frequency of the candidate channel may be increased, to detect the candidate channel with good quality in time.

In this embodiment, the service channel is selectively switched based on channel quality information of the primary channel and the trend information of the primary channel, where the service channel is located on the primary channel. A change direction of the channel quality of the primary channel may be learned in advance based on the trend information of the primary channel, so that one or more first candidate channels are scanned in advance, or the primary channel is selectively switched in advance. This helps avoid a problem of service transmission freezing caused by channel quality deterioration. The one or more first candidate channels are candidate channels with excellent or good channel quality. The candidate channel with excellent or good channel quality is scanned, and a candidate channel with poor channel quality is not scanned, so that impact of channel scanning on service performance can be reduced. In this way, a problem of service transmission freezing caused by scanning the candidate channel with poor channel quality is avoided. Through threshold detection by the Wi-Fi chip, a chip-level freezing warning may be implemented. Effectiveness of the chip-level freezing warning is far greater than that of a freezing warning in channel quality evaluation. This is beneficial to stability and reliability of data transmission in a service running process.

Based on the foregoing similar technical concept, an embodiment of this application provides a channel switching apparatus. The channel switching apparatus may be the electronic device in any possible design solution of the method in the foregoing embodiments. The channel switching apparatus includes at least one corresponding module that is in the channel switching method provided above and that is configured to perform a method step, an operation, or a behavior performed by the electronic device. The at least one module may be disposed in one-to-one correspondence with the method step, the operation, or the behavior performed by the electronic device. These modules may be implemented by using a computer program, may be implemented through a hardware circuit, or may be implemented by using a computer program in combination with a hardware circuit.

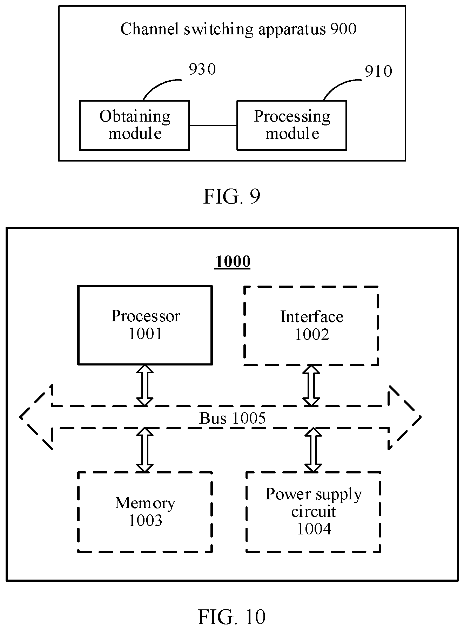

According to the foregoing method, FIG. 9 is a diagram of a channel switching apparatus 900 according to an embodiment of this application.

The apparatus 900 may be an electronic device, or may be a chip or a circuit, for example, a chip or a circuit that may be disposed in an electronic device.

The apparatus 900 may include a processing module 910 (for example, including a processor and a communication processor) and an obtaining module 930.

Optionally, the obtaining module 930 may be implemented via a transceiver, a transceiver-related circuit, or an interface circuit.

In some embodiments, the obtaining module 930 is configured to: measure at least one first channel parameter of a primary channel, and determine current channel quality information of the primary channel based on the at least one first channel parameter, where a service channel is located on the primary channel, and the current channel quality information indicates current communication quality.

The obtaining module 930 is further configured to obtain trend information of the primary channel based on the current channel quality information and at least one piece of historical channel quality information, where the trend information indicates a channel quality change trend, and the at least one piece of historical channel quality information is determined based on a channel parameter measured before the at least one first channel parameter.

The processing module 910 is configured to selectively switch the service channel based on the current channel quality information and the trend information.

In some embodiments, the processing module 901 is configured to: if the current channel quality information and the trend information satisfy a first condition, switch the service channel to at least one first candidate channel to obtain a scanning result of the at least one first candidate channel, and switch the service channel back to the primary channel, where the first condition includes any one of the following: the current channel quality information is greater than a second threshold, and the trend information is first trend information; or the current channel quality information is greater than a first threshold but less than a second threshold, and the trend information is third trend information, where the first trend information indicates that channel quality of the primary channel after a current moment starts to deteriorate, and the third trend information indicates that the channel quality of the primary channel after the current moment remains unchanged; or if the current channel quality information is less than a first threshold and/or the trend information is second trend information, switch the service channel to a target channel, and change the primary channel to the target channel, where the target channel is one of at least one first candidate channel, and the second trend information indicates that channel quality of the primary channel after a current moment deteriorates to affect a service.

In some embodiments, the obtaining module 930 is configured to input the current channel quality information and the at least one piece of historical channel quality information into a neural network model, to obtain the trend information of the primary channel output by the neural network model.

The neural network model is obtained through training based on a plurality of pieces of channel quality information and corresponding trend information.

In some embodiments, a candidate channel set of the primary channel includes a first candidate channel set and a second candidate channel set, the first candidate channel set includes the at least one first candidate channel, the second candidate channel set includes at least one second candidate channel, and channel quality information of any one of the at least one first candidate channel is greater than channel quality information of any one of the at least one second candidate channel.

In some embodiments, the channel quality information of any one of the at least one first candidate channel is greater than the first threshold.

In some embodiments, the processing module 910 is further configured to update a respective priority of the at least one first candidate channel based on the scanning result of the at least one first candidate channel, where the respective priority of the at least one first candidate channel is used to determine the target channel.

In some embodiments, the processing module 910 is further configured to: predict a scanning result of the at least one second candidate channel based on a scanning result of a first candidate channel that is in the first candidate channel set and whose frequency is adjacent to frequency of the at least one second candidate channel, and update the first candidate channel set based on the scanning result of the at least one second candidate channel.

In some embodiments, the processing module 910 is further configured to: if it is detected that at least one second channel parameter exceeds a preset threshold, switch the service channel to the target channel, and change the primary channel to the target channel.

The modules in the foregoing embodiment may also be referred to as units, circuits, or components.

For concepts, explanations, detailed descriptions, and other steps of the apparatus 900 that are related to the technical solutions provided in embodiments of this application, refer to the descriptions of the content in the foregoing methods or other embodiments. Details are not described herein again.

FIG. 10 is a diagram of a structure of a channel switching apparatus 1000 according to an embodiment of this application. The channel switching apparatus 1000 may be configured to implement functions of the foregoing method. As shown in FIG. 10, the channel switching apparatus 1000 includes one or more processors 1001, and optionally, further includes an interface 1002. When related program instructions are executed in the at least one processor 1001, the apparatus 1000 may be enabled to implement the channel switching method provided in any one of the foregoing embodiments and the possible designs thereof. Alternatively, the processor 1001 is configured to implement, through a logic circuit or by executing code instructions, the channel switching method provided in any one of the foregoing embodiments and the possible designs thereof. The interface 1002 may be configured to: receive program instructions, and transmit the program instructions to the processor. Alternatively, the interface 1002 may be used by the apparatus 1000 to communicate and interact with another device, for example, exchange control signaling and/or service data with the another device. For example, the interface 1002 may be configured to: receive a signal from an apparatus other than the apparatus 1000, and transmit the signal to the processor 1001, or send a signal from the processor 1001 to an apparatus other than the apparatus 1000. The interface 1002 may be code and/or a data read and write interface circuit, or the interface 1002 may be a signal transmission interface circuit between a processor and a transceiver, or a pin of a chip. Optionally, the apparatus 1000 may further include at least one memory 1003, and the memory 1003 may be configured to store related program instructions and/or data that are/is needed. Optionally, the apparatus 1000 may further include a power supply circuit 1004. The power supply circuit 1004 may be configured to supply power to the processor 1001. The power supply circuit 1004 and the processor 1001 may be located in a same chip, or the power supply circuit 1004 may be located in a chip other than a chip in which the processor 1001 is located. Optionally, the apparatus 1000 may further include a bus 1005, and parts in the apparatus 1000 may be interconnected through the bus 1005.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

An interface, or a transceiver in embodiments of this application may include a separate transmitter and/or a separate receiver, or the transmitter and the receiver may be integrated. A transceiver apparatus, the interface, or the transceiver may work under an indication of a corresponding processor. Optionally, the transmitter may correspond to a transmitter machine in a physical device, and the receiver may correspond to a receiver machine in the physical device.

Some other embodiments of embodiments of this application further provide a computer program product. The computer program product includes program instructions. When the program instructions are executed by a processor, the processor is enabled to perform the steps in the foregoing method embodiments.

Some other embodiments of embodiments of this application further provide a computer-readable storage medium. The computer-readable storage medium stores program instructions. When the program instructions are run by a processor, the processor is enabled to perform the steps in the foregoing method embodiments.

Some other embodiments of embodiments of this application further provide an electronic device. The electronic device includes one or more processors, and a memory, configured to store one or more programs. When the one or more programs are executed by the one or more processors, the one or more processors are enabled to implement the steps in the foregoing method embodiments.

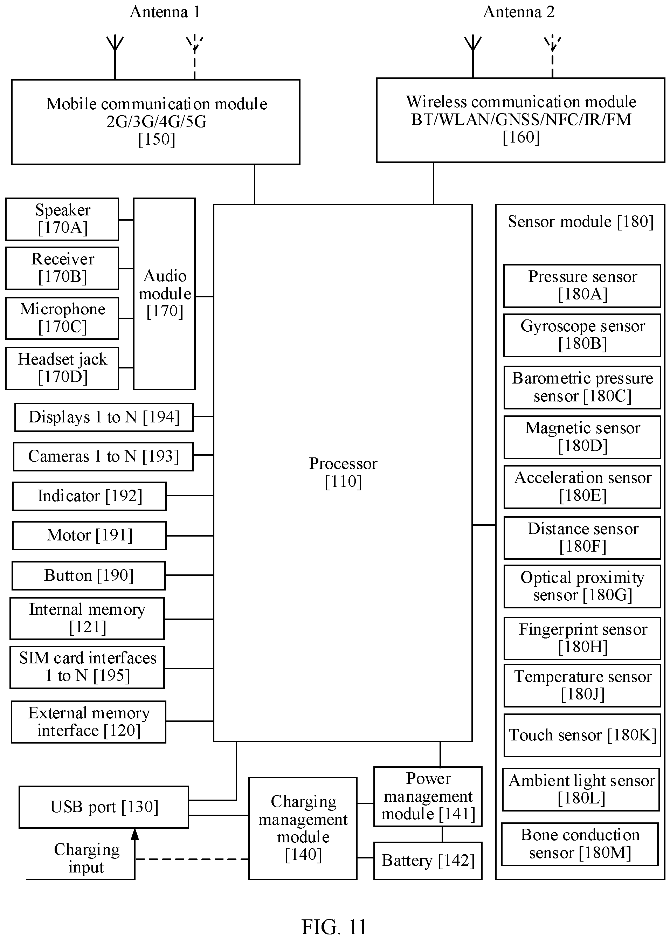

Certainly, the electronic device may further include other devices such as an audio module and a SIM card interface. This is not limited in embodiments of this application. When the electronic device includes another device, the electronic device may be specifically an electronic device shown in FIG. 11.

For example, FIG. 11 is a diagram of a structure of the electronic device 11 (for example, a mobile phone) in FIG. 1.

The electronic device 11 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. It may be understood that the structure shown in this embodiment does not constitute a specific limitation on the electronic device 11. In some other embodiments of this application, the electronic device 11 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. In some embodiments, the electronic device 11 may alternatively include one or more processors 110. The controller may be a nerve center and a command center of the electronic device 11. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency of the electronic device 11 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB port 130 is a port that conforms to a USB standard specification, and may be specifically a mini USB port, a micro USB port, a USB type-C port, or the like. The USB port 130 may be configured to connect to a charger to charge the electronic device 11, or may be configured to perform data transmission between the electronic device 11 and a peripheral device, or may be configured to connect to a headset for playing an audio through the headset.

It may be understood that an interface connection relationship between the modules shown in this embodiment of this application is merely an example, and does not constitute a limitation on the structure of the electronic device 11. In some other embodiments of this application, the electronic device 11 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 11. The charging management module 140 may further supply power to the electronic device 11 through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 11 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 11 may be configured to cover one or more communication bands. Different antennas may be further multiplexed, to improve antenna utilization. For example: the antenna 1 may be multiplexed as a diversity antenna of a wireless local area network. In some other embodiments, the antenna may be used in combination with a tuning switch.

The mobile communication module 150 may provide a solution, applied to the electronic device 11, to wireless communication including 2G, 3G, 4G, 5G, or the like. The mobile communication module 150 may include at least one filter, switch, power amplifier, low noise amplifier, or the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the electronic device 11, to wireless communication including a wireless local area network (wireless local area network, WLAN), Bluetooth, a global navigation satellite system (global navigation satellite system, GNSS), frequency modulation (frequency modulation, FM), NFC, an infrared (infrared, IR) technology, and the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 11, the antenna 1 is coupled to the mobile communication module 150, and the antenna 2 is coupled to the wireless communication module 160. Therefore, the electronic device 11 can communicate with a network and another device by using a wireless communication technology. The wireless communication technology may include technologies such as GSM, GPRS, CDMA, WCDMA, TD-SCDMA, LTE, GNSS, WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 11 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 11 may include one or N displays 194, where N is a positive integer greater than 1.

The electronic device 11 may implement a photographing function through the ISP, one or more cameras 193, the video codec, the GPU, one or more displays 194, the application processor, and the like.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device 11 may be implemented through the NPU, for example, voice processing, image recognition, facial recognition, speech recognition, and text understanding.

The external memory interface 120 may be configured to connect to an external memory card such as a Micro SD card, to extend a storage capability of the electronic device 11. The external memory card communicates with the processor 110 through the external memory interface 120, to implement a data storage function. For example, data files such as music, photographs, and videos are stored in the external memory card.

The internal memory 121 may be configured to store one or more computer programs. The one or more computer programs include instructions. The processor 110 may run the instructions stored in the internal memory 121, to enable the electronic device 11 to perform a channel switching method provided in some embodiments of this application, various functional applications and data processing, and the like. The internal memory 121 may include a program storage area and a data storage area. The program storage area may store an operating system. The program storage area may further store one or more applications (such as a gallery or a contact). The data storage area may store data (such as a photo or a contact) or the like created in a process of using the electronic device 11. In addition, the internal memory 121 may include a high-speed random access memory, or may include a non-volatile memory, for example, at least one magnetic disk storage device, a flash memory, or a universal flash storage (universal flash storage, UFS). In some embodiments, the processor 110 may run the instructions stored in the internal memory 121 and/or the instructions stored in the memory disposed in the processor 110, to enable the electronic device 11 to perform the channel switching method provided in embodiments of this application, and various functional applications and data processing.

The electronic device 11 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The electronic device 11 may listen to music or answer a hands-free call through the speaker 170A. The receiver 170B, also referred to as an "earpiece", is configured to convert an audio electrical signal into a sound signal. When the electronic device 11 answers a call or receives speech information, the receiver 170B may be put close to a human ear to listen to the voice message. The microphone 170C, also referred to as a "mike" or a "mic", is configured to convert a sound signal into an electrical signal. When making a call or sending speech information, a user may make a sound near the microphone 170C through the mouth of the user, to input a sound signal into the microphone 170C. At least one microphone 170C may be disposed in the electronic device 11. In some other embodiments, two microphones 170C may be disposed in the electronic device 11, to collect a sound signal and further implement a noise reduction function. In some other embodiments, three, four, or more microphones 170C may alternatively be disposed in the electronic device 11, to collect a sound signal, reduce noise, identify a sound source, implement a directional recording function, and the like. The headset jack 170D is configured to connect to a wired headset. The headset jack 170D may be the USB port 130 or a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 11 may receive a button input, and generate a button signal input related to a user setting and function control of the electronic device 11.

The SIM card interface 195 is configured to connect to a SIM card. The SIM card may be inserted into the SIM card interface 195 or removed from the SIM card interface 195, to implement contact with or separation from the electronic device 11. The electronic device 11 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 is also compatible with an external storage card. The electronic device 11 interacts with a network through the SIM card, to implement functions such as calling and data communication. In some embodiments, the electronic device 11 uses an eSIM, that is, an embedded SIM card. The eSIM card may be embedded in the electronic device 11, and cannot be separated from the electronic device 11.

The electronic device in embodiments of this application may perform the steps in the foregoing channel switching method embodiments, and technical principles and technical effects thereof are not described herein again.

It may be clearly understood by a person skilled in the art that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: types of processing circuits that can execute the program instructions such as a central processing unit (central processing unit, CPU), a microprocessor, a digital signal processor (digital signal processing, DSP), a microcontroller (microcontroller unit, MCU), or an artificial intelligence processor. In some other embodiments, the processor may further include a circuit that has another processing function (for example, a hardware circuit, a bus, and an interface that are used for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware device, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by software, hardware, or a combination of software and hardware, this application may be implemented by different software and hardware, which is not limited to only one type of software or hardware. For example, one of the modules or units may be implemented through the CPU, and another module or unit may be implemented through the DSP. Similarly, when the hardware is used for implementation, one of the modules or units may be implemented through the ASIC, and another module or unit may be implemented through the FPGA. Certainly, it is also not specified that some or all modules or units are implemented through a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, descriptions of each embodiment have respective focuses. For a part that is not described in detail in an embodiment, refer to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments in this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S101", or "S102" are merely used for distinguishing and description and for ease of organizing this specification. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B, and C are included, where A, B, and C may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A channel switching method, wherein the method comprises:

   measuring at least one first channel parameter of a primary channel, and determining current channel quality information of the primary channel based on the at least one first channel parameter, wherein a service channel is located on the primary channel, and the current channel quality information indicates current communication quality;
   obtaining trend information of the primary channel based on the current channel quality information and at least one piece of historical channel quality information, wherein the trend information indicates a channel quality change trend, and the at least one piece of historical channel quality information is determined based on a channel parameter measured before the at least one first channel parameter; and
   selectively switching the service channel based on the current channel quality information and the trend information.

2. The method according to claim 1, wherein the selectively switching the service channel based on the current channel quality information and the trend information comprises:

   if the current channel quality information and the trend information satisfy a first condition, switching the service channel to at least one first candidate channel to obtain a scanning result of the at least one first candidate channel, and switching the service channel back to the primary channel, wherein the first condition comprises any one of the following: the current channel quality information is greater than a second threshold, and the trend information is first trend information; or the current channel quality information is greater than a first threshold but less than a second threshold, and the trend information is third trend information, wherein the first trend information indicates that channel quality of the primary channel after a current moment starts to deteriorate, and the third trend information indicates that the channel quality of the primary channel after the current moment remains unchanged; or

if the current channel quality information is less than a first threshold and/or the trend information is second trend information, switching the service channel to a target channel, and changing the primary channel to the target channel, wherein the target channel is one of at least one first candidate channel, and the second trend information indicates that channel quality of the primary channel after a current moment deteriorates to affect a service.

3. The method according to claim 2, wherein the obtaining trend information of the primary channel based on the current channel quality information and at least one piece of historical channel quality information comprises:

inputting the current channel quality information and the at least one piece of historical channel quality information into a neural network model, to obtain the trend information of the primary channel output by the neural network model, wherein

the neural network model is obtained through training based on a plurality of pieces of channel quality information and corresponding trend information.

4. The method according to any one of claims 1 to 3, wherein a candidate channel set of the primary channel comprises a first candidate channel set and a second candidate channel set, the first candidate channel set comprises the at least one first candidate channel, the second candidate channel set comprises at least one second candidate channel, and channel quality information of any one of the at least one first candidate channel is greater than channel quality information of any one of the at least one second candidate channel.

5. The method according to claim 4, wherein the channel quality information of any one of the at least one first candidate channel is greater than the first threshold.

6. The method according to claim 4 or 5, wherein the method further comprises:
updating a respective priority of the at least one first candidate channel based on the scanning result of the at least one first candidate channel, wherein the respective priority of the at least one first candidate channel is used to determine the target channel.

7. The method according to claim 6, wherein the method further comprises:

predicting a scanning result of the at least one second candidate channel based on a scanning result of a first candidate channel that is in the first candidate channel set and whose frequency is adjacent to frequency of the at least one second candidate channel; and
updating the first candidate channel set based on the scanning result of the at least one second candidate channel.

8. The method according to any one of claims 1 to 7, wherein the method further comprises:
if it is detected that at least one second channel parameter exceeds a preset threshold, switching the service channel to the target channel, and changing the primary channel to the target channel.

9. A channel switching apparatus, wherein the apparatus comprises:

an obtaining module, configured to: measure at least one first channel parameter of a primary channel, and determine current channel quality information of the primary channel based on the at least one first channel parameter, wherein a service channel is located on the primary channel, and the current channel quality information indicates current communication quality, wherein
the obtaining module is further configured to obtain trend information of the primary channel based on the current channel quality information and at least one piece of historical channel quality information, wherein the trend information indicates a channel quality change trend, and the at least one piece of historical channel quality information is determined based on a channel parameter measured before the at least one first channel parameter; and
a processing module, configured to selectively switch the service channel based on the current channel quality information and the trend information.

10. The apparatus according to claim 9, wherein the processing module is configured to:

if the current channel quality information and the trend information satisfy a first condition, switch the service channel to at least one first candidate channel to obtain a scanning result of the at least one first candidate channel, and switch the service channel back to the primary channel, wherein the first condition comprises any one of the following: the current channel quality information is greater than a second threshold, and the trend information is first trend information; or the current channel quality information is greater than a first threshold but less than a second threshold, and the trend information is third trend information, wherein the first trend information indicates that channel quality of the primary channel after a current moment starts to deteriorate, and the third trend information indicates that the channel quality of the primary channel after the current moment remains unchanged; or

if the current channel quality information is less than a first threshold and/or the trend information is second trend information, switch the service channel to a target channel, and change the primary channel to the target channel, wherein the target channel is one of at least one first candidate channel, and the second trend information indicates that channel quality of the primary channel after a current moment deteriorates to affect a service.

11. The apparatus according to claim 10, wherein the obtaining module is configured to:

input the current channel quality information and the at least one piece of historical channel quality information into a neural network model, to obtain the trend information of the primary channel output by the neural network model, wherein the neural network model is obtained through training based on a plurality of pieces of channel quality information and corresponding trend information.

12. The apparatus according to any one of claims 9 to 11, wherein a candidate channel set of the primary channel comprises a first candidate channel set and a second candidate channel set, the first candidate channel set comprises the at least one first candidate channel, the second candidate channel set comprises at least one second candidate channel, and channel quality information of any one of the at least one first candidate channel is greater than channel quality information of any one of the at least one second candidate channel.

13. The apparatus according to claim 12, wherein the channel quality information of any one of the at least one first candidate channel is greater than the first threshold.

14. The apparatus according to claim 12 or 13, wherein the processing module is further configured to: update a respective priority of the at least one first candidate channel based on the scanning result of the at least one first candidate channel, wherein the respective priority of the at least one first candidate channel is used to determine the target channel.

15. The apparatus according to claim 14, wherein the processing module is further configured to:

predict a scanning result of the at least one second candidate channel based on a scanning result of a first candidate channel that is in the first candidate channel set and whose frequency is adjacent to frequency of the at least one second candidate channel; and update the first candidate channel set based on the scanning result of the at least one second candidate channel.

16. The apparatus according to any one of claims 9 to 15, wherein the processing module is further configured to: if it is detected that at least one second channel parameter exceeds a preset threshold, switch the service channel to the target channel, and change the primary channel to the target channel.

17. A channel switching apparatus, comprising at least one processor and an interface, wherein the at least one processor is configured to invoke instructions from the interface and run the instructions; and when the at least one processor executes the instructions, the method according to any one of claims 1 to 8 is implemented.

18. An electronic device, comprising:

one or more processors; and a memory, configured to store one or more programs, wherein when the one or more programs are executed by the one or more processors, the one or more processors are enabled to implement the method according to any one of claims 1 to 8.

19. A computer-readable storage medium, comprising computer instructions, wherein when the computer instructions are run on an electronic device, the electronic device is enabled to perform the method according to any one of claims 1 to 8.

20. A computer program product, wherein the computer program product comprises program instructions; and when the program instructions are executed by a processor, the method according to any one of claims 1 to 8 is implemented.

FIG. 1

| Service major time slice | Scanning time slice |
|---|---|
| Switch to a primary channel on which a service is run | Switch to another available channel → Collect statistics of channel parameters of other available channels → Evaluate a channel → Select an optimal channel |

FIG. 2

Measure at least one first channel parameter of a primary channel, and determine current channel quality information of the primary channel based on the at least one first channel parameter, where a service channel is located on the primary channel

S301

Obtain trend information of the primary channel based on the current channel quality information and at least one piece of historical channel quality information

S302

Selectively switch the service channel based on the current channel quality information and the trend information

S303

FIG. 3

Channel switching apparatus 40

Control module 41

Channel evaluation module 42

Wi-Fi chip 50

FIG. 4

Channel switching apparatus 40

Control module 41

Channel evaluation module 42

Adjacent-channel prediction module 43

Wi-Fi chip 50

Scan and update channel quality information

Scan and update channel quality information

Candidate channel with excellent channel quality

Candidate channel with good channel quality

Migrate

Candidate channel with poor channel quality

FIG. 5

Measure at least one first channel parameter of a primary channel, and determine current channel quality information of the primary channel based on the at least one first channel parameter, where a service channel is located on the primary channel ⟋ S601

Obtain trend information of the primary channel based on the current channel quality information and at least one piece of historical channel quality information ⟋ S602

If the current channel quality information and the trend information satisfy a first condition, switch the service channel to at least one first candidate channel to obtain a scanning result of the at least one first candidate channel, and switch the service channel back to the primary channel ⟋ S603

If the current channel quality information is less than a first threshold and/or the trend information is second trend information, switch the service channel to a target channel, and change the primary channel to the target channel ⟋ S604

FIG. 6

Channel switching apparatus 40

Control module 41

Channel evaluation module 42

Wi-Fi chip 50

A preset threshold is exceeded

FIG. 7

FIG. 8A

CONT.
FROM
FIG. 8A

S806
Channel quality of
the primary channel
is excellent

S807
Channel quality
of the primary
channel is good

S808
Channel quality
of the primary
channel is poor

S806
Trend information
of the primary
channel is first
trend information

S807
Determine
whether trend
information of the
primary channel is first
trend information or
second trend
information

Yes

No

CONT.
FROM
FIG. 8A

S809
Measure each first
candidate channel in a
first candidate channel set

S810
Select an optimal
channel from a
first candidate
channel set

S811
Start primary
channel
switching

CONT.
FROM
FIG. 8A

Threshold
detection is
abnormal

FIG. 8B

Channel switching apparatus 900

930 910

| Obtaining module | Processing module |

FIG. 9

**1000**

Processor
1001

Interface
1002

Bus 1005

Memory
1003

Power supply
circuit
1004

FIG. 10

Antenna 1

Antenna 2

| Mobile communication module 2G/3G/4G/5G [150] | Wireless communication module BT/WLAN/GNSS/NFC/IR/FM [160] |

| Speaker [170A] | |
| Receiver [170B] | Audio module [170] |
| Microphone [170C] | |
| Headset jack [170D] | |

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB port [130]

Charging input

Charging management module [140]

Power management module [141]

Battery [142]

FIG. 11

## INTERNATIONAL SEARCH REPORT

| International application No. |
| --- |
| **PCT/CN2023/076818** |

| A. | CLASSIFICATION OF SUBJECT MATTER |
| --- | --- |
| | H04W 36/00(2009.01)i |

According to International Patent Classification (IPC) or to both national classification and IPC

| B. | FIELDS SEARCHED |
| --- | --- |

Minimum documentation searched (classification system followed by classification symbols)

IPC:H04W H04L H04Q

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 信道, 质量, 参数, 变化, 趋势, 历史, 切换, 主信道, 业务, 接入点, 频点,, wifi, channel, quality, parameter, trend, history, handover, traffic, AP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 105263173 A (XIAOMI INC.) 20 January 2016 (2016-01-20) description, paragraphs [0051]-[0095] | 1-20 |
| Y | CN 113302980 A (CHENGDU SKSPRUCE TECHNOLOGY, INC.) 24 August 2021 (2021-08-24) description, paragraphs [0060]-[0072] | 1-20 |
| A | CN 105979599 A (CHONGQING UNIVERSITY OF POSTS AND TELECOMMUNICATIONS) 28 September 2016 (2016-09-28) entire document | 1-20 |
| A | CN 113286335 A (ZHUHAI TAIXIN SEMICONDUCTOR CO., LTD.) 20 August 2021 (2021-08-20) entire document | 1-20 |
| A | CN 113875175 A (TELEFONAKTIEBOLAGET LM ERICSSON (PUBL)) 31 December 2021 (2021-12-31) entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 May 2023** | **30 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/076818** |

### C.    DOCUMENTS CONSIDERED TO BE RELEVANT

| Category* | Citation of document, with indication, where appropriate, of the relevant passages | Relevant to claim No. |
| --- | --- | --- |
| A | US 6594241 B1 (TELEFONAKTIEBOLAGET LM ERICSSON TELEFON (PUBL)) 15 July 2003 (2003-07-15)<br>    entire document | 1-20 |

INTERNATIONAL SEARCH REPORT
Information on patent family members

International application No.

**PCT/CN2023/076818**

| Patent document cited in search report | | | Publication date (day/month/year) | Patent family member(s) | | | Publication date (day/month/year) |
|---|---|---|---|---|---|---|---|
| CN | 105263173 | A | 20 January 2016 | None | | | |
| CN | 113302980 | A | 24 August 2021 | WO | 2022056766 | A1 | 24 March 2022 |
| CN | 105979599 | A | 28 September 2016 | None | | | |
| CN | 113286335 | A | 20 August 2021 | None | | | |
| CN | 113875175 | A | 31 December 2021 | WO | 2020226542 | A1 | 12 November 2020 |
| | | | | EP | 3966971 | A1 | 16 March 2022 |
| | | | | US | 2022217556 | A1 | 07 July 2022 |
| US | 6594241 | B1 | 15 July 2003 | ES | 2291229 | T3 | 01 March 2008 |
| | | | | EP | 1236371 | A1 | 04 September 2002 |
| | | | | TW | 488177 | B | 21 May 2002 |
| | | | | AT | 369021 | T | 15 August 2007 |
| | | | | WO | 0143485 | A1 | 14 June 2001 |
| | | | | AU | 2243601 | A | 18 June 2001 |
| | | | | DE | 60035795 | D1 | 13 September 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210199863